# EUROPEAN PATENT SPECIFICATION

(11) **EP 3 561 189 B1**
(45) Date of publication and mention of the grant of the patent: **07.06.2023**
(21) Application number: 18169196.5
(22) Date of filing: 25.04.2018
(51) Int. Cl.: E04B 2/74, E06B 5/16, E06B 3/66, B32B 17/06, E04B 1/94

(54) **A PARTITION WALL, ESPECIALLY FOR CREATION OF A FIRE COMPARTMENT IN ROOMS OF BUILDINGS**
TRENNWAND, INSBESONDERE ZUR SCHAFFUNG EINES BRANDABSCHNITTS IN GEBÄUDERÄUMEN
PAROI DE SÉPARATION, EN PARTICULIER POUR LA CRÉATION D'UN COMPARTIMENT COUPE-FEU DANS DES SALLES DE BÂTIMENTS

(43) Date of publication of application: 30.10.2019
(73) Proprietor: Etex Building Performance GmbH, 40878 Ratingen (DE)
(72) Inventor: CZICHON, Christian, 40476 Düsseldorf (DE)
(74) Representative: Etex Services NV - Etex IPSC

(56) References cited:
- WO-A1-2015/081454
- NL-A- 8 303 158

## Description

The present invention relates to a partition wall, especially for creation of a fire compartment in rooms of buildings, having at least two, vertically and/or horizontally arranged stud partition profile elements which are spaced apart from each other and extend vertically between the floor and the ceiling of a room respectively horizontally to the floor respectively ceiling of a room; opaque plankings, preferably building material boards respectively building material plates, mounted respectively mountable on opposite sides of the stud partition profile elements, and at least one light transmission area respectively light transmission section, preferably at least one single-hole glazing or at least one light band surrounded by plankings, having at least one fire protection glass pane.

The present invention further relates to a method for establishing such an inventive partition wall.

In the state of the art various systems for creation of partition walls - so called partition wall systems - are known, whereby a partition wall normally is created as a so called stud wall. The first step is the montage of so called stud partition profile elements made from metal or wood on wall, ceiling and/or floor of a room. The stud partition profile elements can be provided with further vertically respectively horizontally stud partition profile elements, if required. Then this fixed stud partition profile elements are provided on both sides with plankings, which are normally opaque, especially building material boards respectively building material plates, which are fixed to the stud partition profile elements. The room between the opposing plankings, which are spaced apart from each other by the stud partition profile elements can be filled with an insulating material, if required.

Especially for fire protection purposes from the state of the art are further known partition walls, whereby the stud wall is provided with non-combustible plankings, especially non-combustible building material boards respectively non-combustible building material plates. Such partition walls are for example used for creation of a fire compartment in rooms of buildings. The joint surfaces of the plankings arranged adjacent to each other normally abuts blunt. Remaining gaps are normally jointed. Further solutions are known, whereby the plankings are provided with tongues and/or grooves at their joint surfaces or whereby plankings are provided on at least one side of the stud partition profile elements with two or more layers, especially to comply requirements with regard to prevent the spread of fire and smoke and also the impermissible transition of heat from a room in respectively to another room, especially within the scope of a given respectively predefined fire resistance duration. Joining/filling of gaps is also often required with such solutions, especially for reasons of optical appearance.

Sometimes it is required to provide a partition wall with a light transmission area respectively light transmission section, preferably at least one single-hole glazing or at least one light band surrounded by plankings, for example in corridors of buildings, such as hospitals or the like public institutions.

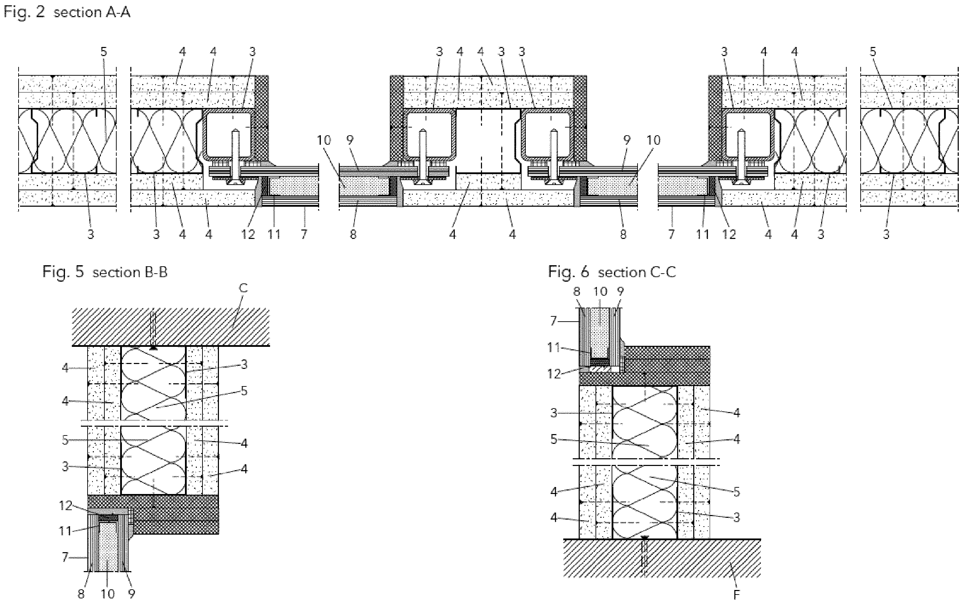

A partition wall of the type mentioned in the opening paragraph is known from WO2015/081454A1. Said known partition wall having a light-passage region and a wall region has a substructure, with a covering, and a panel assembly. The panel assembly has at least two outer panels, at least one spacer and an intermediate fire protection glass pane comprising at least two glass panes between which a fire protection layer is arranged. Fig. 2 and 6 show an arrangement with three glass panes. The panel assembly furthermore has a retaining part. The panel assembly is arranged in a substantially surface-flush manner with the covering of the substructure. The panel assembly is inserted in the substructure, in the light-passage region. The retaining part of the panel assembly projects into the light-blocking region and can be fixed in the wall region.

The integration respectively installation of a glazing in form of a single row strip window, especially a single-hole glazing or a light band, in a partition wall with plankings on both sides of the stud partition profile elements, for example gypsum plaster boards or calcium silicate plaster boards is often very cumbersome, especially since the stud wall has to be provided with further stud partition profile elements supporting the glazing to be integrated respectively installed. Fire protection glazings are translucent components that prevent the spread of fire and smoke and also the impermissible transition of heat from a room in respectively to another room within the scope of a given respectively predefined fire resistance duration. In the DIN EN 13501 especially the fire resistance classes EI and EW are normalized and with regard to the requirements, especially fire classification of construction products and building elements, explained. Further the so far used glass panes for a glazing in a partition wall, especially fire protection glass panes, normally comprise a frame respectively frame like profile elements, for example so called glass holding frames or glass holding strips, which inter alia are used for fixing respectively mounting the glass panes to/on the stud partition profile elements. Thereby usually the plaster boards of the plankings surrounding the glass panes projects/protrudes to the glass panes or the glass panes projects/protrudes to the plaster boards of the plankings surrounding the glass panes, especially such that the glass panes and the plaster boards surrounding the glass panes are not flush even with/to each other. This projections affect the optical appearance. Further the mounting of the glass panes to the stud partition profile elements is cumbersome, especially since surrounding profile elements and glass holding strips have to be mounted for the glass panes of the glazing. Further the projections of parts or elements of a partition wall can lead to an uneven or irregular temperature load in case of a fire, such that in the area of projections a higher temperature load is given, which for example could lead to so called hot spots which limit the respective fire resistance duration.

Against this background it is object of the present invention to provide a partition wall of the aforementioned kind, especially for creation of a fire compartment in rooms of buildings, which is improved with regard to the mentioned disadvantages and can especially be manufactured respectively established easily and cost-effectively. Whilst keeping ease of installation of the partition wall on the job site, the manufacturing process of the glass panes used in the partition shall be simplified. The invention shall optimise the light transmission area of the glass panes, especially compared to the non-transmission area at the edges used for fixing the glass, and the fixings shall be covered in order to obtain an aesthetically appealing partition wall.

According to the first aspect of the invention a partition wall, especially for creation of a fire compartment in rooms of buildings, is provided. The partition wall having at least two, vertically and/or horizontally arranged stud partition profile elements which are spaced apart from each other and extend vertically between the floor and the ceiling of a room respectively horizontally to the floor respectively ceiling of a room. The partition wall having opaque plankings, preferably building material boards respectively building material plates, mounted on opposite sides of the stud partition profile elements. The partition wall having at least one light transmission area respectively light transmission section, preferably at least one single-hole glazing or at least one light band surrounded by plankings, having at least one fire protection glass pane. The fire protection glass pane of the light transmission area is mounted on one side of the stud partition profile elements in such a manner/way, that this fire protection glass pane is substantially flush even with/to the plankings mounted on this/the same side of the stud partition profile elements. The fire protection glass pane is a compound structure of at least two glass panes arranged in parallel to each other, between which in each case at least one fire protection layer is arranged. One of the at least two glass panes of the fire protection glass pane projects/protrudes over the at least one other glass pane of the fire protection glass pane on at least one side edge of the fire protection glass pane, preferably creating a step slot on at least one side edge of the fire protection glass pane. The glass pane comprises in the project/protrude area respectively section of the glass pane at least two openings/holes which are spaced apart from each other, preferably are arranged on opposing edges of the glass pane. The openings/holes are provided for fastening the fire protection glass pane on/to the stud partition profile elements, especially by at least one fixing means, especially comprising a screw passing through the glass pane.

The solution according to the present invention allows an easy and cost effective integration and installation of a fire protection glazing in form of a single row strip window, especially a single-hole glazing or a light band, in a partition wall with plankings on both sides of the stud partition profile elements. According to the present invention it is provided, that the at least one fire protection glass pane of the light transmission area respectively light transmission section is arranged on one side of the stud partition profile elements in such a manner/way, that this fire protection glass pane is substantially flush even with/to the plankings mounted on this/the same side of the stud partition profile elements The at least one fire protection glass pane is advantageously directly attachable respectively mountable to the one side of the stud partition profile elements. The at least one fire protection glass pane substitutes the otherwise, that is without the light transmission area respectively light transmission section, given plankings on both sides of the stud partition profile elements. The fire protection glass pane is advantageously immobile fixed to the stud partition profile elements and especially not swivel able nor twistable nor otherwise moveable.

Advantageously the present invention allows different thicknesses of the glass panes to adapt to either different fire resistant times and/or different thicknesses of the plankings respectively boards used in the partition wall.

Advantageously it is provided that the vertical and/or horizontal joints/joint surfaces of the fire protection glass pane and the vertical and/or horizontal joints/joint surfaces of the plankings surrounding the fire protection glass pane are mounted respectively mountable flush even and/or positive locking to/with each other. According to the present invention a partition wall is given, which elements advantageously are completely flush even with regard to each other. This results advantageously in a bigger light transmission area respectively light transmission section and also improves the optical appearance of such inventive partition wall.

Advantageously it is further provided that one of the at least two glass panes of the fire protection glass pane projects/protrudes over the at least one other glass pane of the fire protection glass pane on at least two opposing side edges of the fire protection glass pane, preferably creating a step slot on each of the at least two opposing side edges of the fire protection glass pane. A further preferred embodiment of the present invention is characterized in that the glass pane comprises in each of the project/protrude area respectively section of the glass pane at least two openings/holes which are spaced apart from each other, preferably are arranged on opposing edges of the glass pane, for fastening the fire protection glass pane on/to the stud partition profile elements, especially by at least one fixing means, especially comprising a screw passing through the glass pane.

Advantageously it is further provided that the at least one fixing means, especially comprising a screw passing through the glass pane, is flush even and/or positive locking to/with the glass pane.

A further embodiment of the present invention is characterized in that the fire protection glass pane is build according to the so called water-glass-technology or according to the so called gel-technology. In the case of a fire protection pane according to the water-glass technology, as a fire protection layer between a multiplicity, at least two glass panes are used materials, which in particular comprises an alkali silicate mass, which acts as a foaming agent in the event of fire and lathers up. In the case of a fire protection pane according to the gel-technology, the fire protection layer arranged between two glass panes, which is activated in the event of fire, is formed of gelatinous materials, in particular of organic polymers. As a result in both cases the originally transparent glazing creates a practically opaque fire protection wall in case of fire.

A further embodiment of the present invention is characterized in that the at least two glass panes of the fire protection glass pane are spaced apart from each other by means of a spacer providing an edge-compound, which spacer preferably is arranged between the at least two glass panes of the fire protection glass pane and particularly preferred extends along the side edges of the fire protection pane. A further embodiment of the present invention is characterized in that the fire protection glass pane has
a height in a range of ≥ 300 mm and ≤ 5000 mm, preferably ≥ 400 mm and ≤ 3500 mm, more preferably ≥ 500 mm and ≤ 3000 mm,
a width in a range of ≥ 300 mm and ≤ 1800 mm, preferably ≥ 400 mm and ≤ 1700 mm, more preferably ≥ 500 mm and ≤ 1500 mm,
   and
a thickness in a range of ≥ 22 mm and ≤ 60 mm.

A further embodiment of the present invention is characterized in that the fire protection glass pane has a weight in a range of ≥ 40 kg/m² and ≤ 140 kg/m².

Advantageously the inventive fire protection glass panes allow a vertical installation and vice versa a horizontal installation. This especially reduces the storage and stockholding costs.

A further embodiment of the present invention is characterized in that the stud partition profile elements have a cross section which is substantially rectangular, substantially rectangular hollow, substantially C-shaped, substantially U-shaped, substantially H-shaped or substantially L-shaped. The dimensions of the stud partition profile elements are advantageously determined according to the static requirements.

A further embodiment of the present invention is characterized in that the stud partition profile elements are made of wood, steel, aluminium and/or concrete.

A further embodiment of the present invention is characterized in that the plankings, preferably building material boards respectively building material plates, are gypsum plaster boards or calcium silicate plaster boards, preferably according to building material class respectively construction material class A1 or A2. Advantageously the plankings, preferably building material boards respectively building material plates. Standard dimensions are in a range of 600 mm to 1250 mm times 2000 mm to 4000 mm. The thickness is in range of 8 mm to 25 mm.

The partition wall respectively the fire protection glass pane of the partition wall advantageously fulfils fire protection requirements, especially the requirements according to DIN EN 13501, preferred the fire resistance classes EI or EW.

The openings/holes in the glass pane of the fire protection glass pane of the partition wall are provided for fastening the fire protection glass pane on/to a stud partition profile elements, especially by at least one fixing means, especially comprising a screw passing through the glass pane.

According to a second aspect of the invention, a method for establishing a partition wall is provided. The method for establishing a partition wall, especially for creation of a fire compartment in rooms of buildings, comprises the steps of
a) installation of a metal stud construction adjacent to the area which will be covered later by at least one fire protection glass pane, which is a compound structure of at least two glass panes arranged in parallel to each other, between which in each case at least one fire protection layer is arranged, whereby one of the at least two glass panes of the fire protection glass pane projects/protrudes over the at least one other glass pane of the fire protection glass pane on at least one side edge of the fire protection glass pane, preferably creating a step slot on at least one side edge of the fire protection glass pane, and whereby the glass pane comprises in the project/protrude area respectively section of the glass pane at least two openings/holes which are spaced apart from each other, preferably are arranged on opposing edges of the glass pane.
b) arrangement and alignment of profiles supporting the at least one fire protection glass pane, preferably with additional fastening of these profiles at the top and bottom in the supporting structure of the metal stud construction,
c) cladding of the metal stud construction with opaque plankings, preferably a first layer on the opposite side of the at least one fire protection glass pane, and arrangement of soffit strips,
d) installation and lateral fastening of the at least one fire protection glass pane into the profiles,
e) final cladding of the metal stud construction with opaque plankings, preferably a second layer on the side of the at least one glass pane, and joint filling of the outer layer, and
f) filling of the joints around the at least one glass pane with a sealant.

A further embodiment of the present invention with regard to a method is characterized in that a partition wall according to the present invention is established.

Methods according to the second aspect of the invention are used to provide a partition wall according to the first aspect of the invention.

Further details, characteristics and advantages of the present invention are explained in the following in more detail based on the description of the exemplary embodiments shown in the figures of the drawing. In these figures:
- Fig. 1: shows in a schematic view a section of an embodiment of a partition wall according to the present invention;
- Fig. 2: shows a sectional view according to section line A - A of Fig. 1;
- Fig. 3: shows detail A of Fig. 2;
- Fig. 4: shows detail A of Fig. 1;
- Fig. 5: shows a sectional view according to section line B - B of Fig. 1;
- Fig. 6: shows a sectional view according to section line C - C of Fig. 1; and
- Fig. 7: shows a sectional view of a fire protection glass pane for a partition wall according to the present invention.

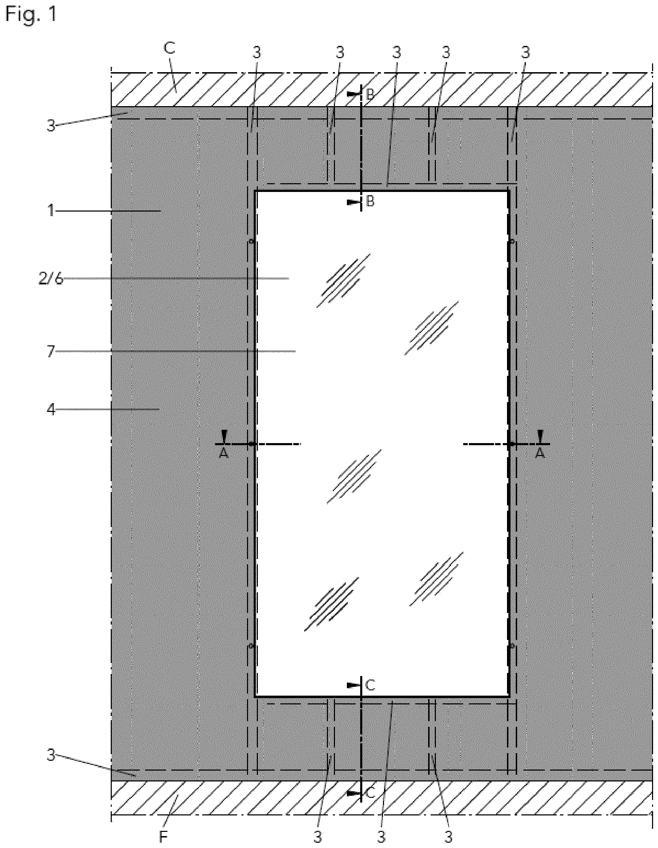

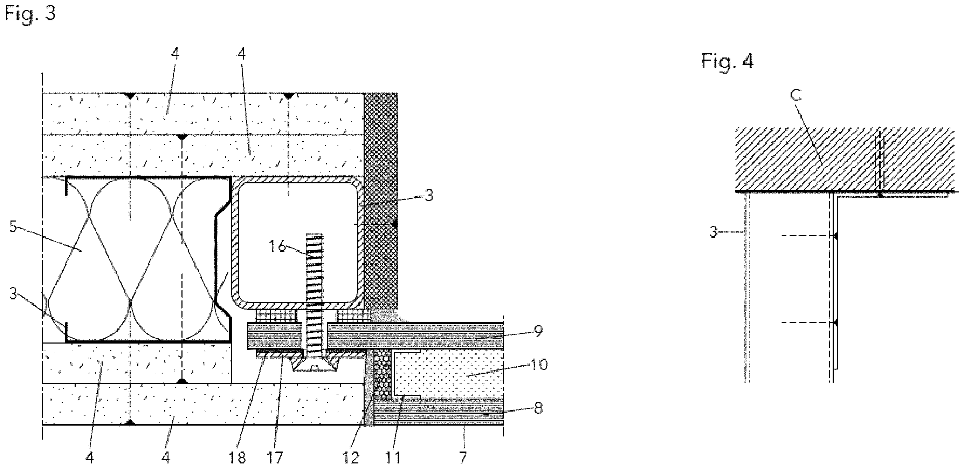

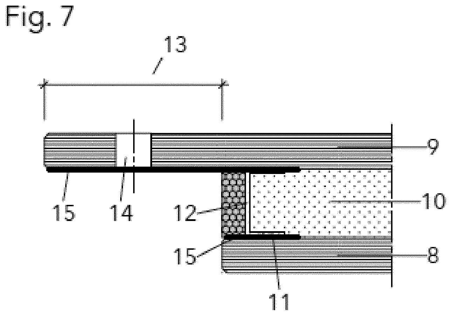

Fig. 1 shows in a schematic view a section of an embodiment of a partition wall 1 according to the present invention, especially for creation of a fire compartment in rooms of buildings. The partition wall 1 comprises a light transmission area 6 respectively light transmission section 6 with a glazing, in the present case a single-hole glazing 2 which is surrounded by plankings 4. Fig. 2, Fig. 4, Fig. 5 and Fig. 6 show details according to Fig. 1. Fig. 3 shows details according to Fig. 2. Fig. 7 shows a sectional view of a fire protection glass pane 7 according to the present invention.

The partition wall shown in Fig. 1, Fig. 2, Fig. 3, Fig. 4, Fig. 5 and Fig. 6 comprises vertically and/or horizontally arranged stud partition profile elements 3. The stud partition profile elements 3 are made of metal and create a so called stud wall. The vertically arranged stud partition profile elements 3 are spaced apart from each other and extend vertically between the floor F and the ceiling C of a room. The horizontally arranged stud partition profile elements 3 extend horizontally to the floor F respectively ceiling C of the room.

The stud partition profile elements 3 are provided on two opposing sides of the stud partition profile elements 3 with opaque plankings 4, preferably building material boards 4 respectively building material plates 4 made of gypsum or calcium silicate. Preferred are gypsum plaster boards or calcium silicate plaster boards according to building material class respectively construction material class A1 or A2. The plaster boards 4 of the plankings 4 mounted on two opposing sides of the stud partition profile elements 3 are in the present case mounted in two layers, preferably two substantially congruently layers, to the stud partition profile elements 3 of the partition wall 1. Plankings 4 with two substantially congruently layers are easier in manufacture and mounting. The room/space between the opposing plankings 4, which are spaced apart from each other by the stud partition profile elements 3 is filled with an insulating material 5, preferably mineral wool boards 5.

The partition wall 1 comprises a light transmission area 6 respectively light transmission section 6. In the present case the light transmission area 6 respectively light transmission section 6is a single-hole glazing or a light band 2, which is surrounded by plankings 4. The light transmission area 6 respectively light transmission section 6 has at least one fire protection glass pane 7.

The fire protection glass pane 7 of the light transmission area 6 is mounted on one side of the stud partition profile elements 3 preferably to vertically arranged stud partition profile elements 3 in such a manner/way, that this fire protection glass pane 7 is substantially flush even with/to the plankings 4 mounted respectively mountable on this/the same side of the stud partition profile elements 3.

The fire protection glass pane 7 is a compound structure of at least two glass panes 8 and 9 arranged in parallel to each other, between which in each case at least one fire protection layer 10 is arranged. One glass panes 9 of the at least two glass panes 8 and 9 of the fire protection glass pane 7 projects/protrudes over the at least one other glass pane 8 of the fire protection glass pane 7 on at least one side edge of the fire protection glass pane 7, preferably creating a step slot on at least one side edge of the fire protection glass pane 7. In the project/protrude area respectively section 13 of the glass pane 9 at least two openings/holes 14 which are spaced apart from each other are provided. In the present case the openings/holes 14 are arranged on opposing edges of the glass pane 9, for fastening the fire protection glass pane 7 on/to the stud partition profile elements 3 by at least one fixing means, especially comprising a screw 16 passing through the glass pane 9, a washer 17 made of steel or stainless steel and a mounting/fixing plate 18.

The exemplary embodiments of the invention shown in the figures merely serve to explain the invention and are in no way restrictive.

### List of reference signs:

- 1: partition wall

- 2: light band
- 3: stud partition profile element
- 4: planking/building material board/building material plate
- 5: insulating material
- 6: light transmission area/light transmission section
- 7: fire protection glass pane
- 8: glass pane
- 9: glass pane
- 10: fire protection layer
- 11: spacer
- 12: sealant
- 13: project/protrude area respectively section
- 14: opening/hole
- 15: edge printing
- 16: screw
- 17: washer
- 18: mounting/fixing plate
- C: ceiling (room)
- F: floor (room)

## Claims

1. A partition wall (1), especially for creation of a fire compartment in rooms of buildings, having
at least two, vertically and/or horizontally arranged stud partition profile elements (3), which are spaced apart from each other and extend vertically between the floor and the ceiling of a room respectively horizontally to the floor respectively ceiling of a room,
opaque plankings (4), preferably building material boards (4) respectively building material plates (4), mounted on opposite sides of the stud partition profile elements (3) and
at least one light transmission area (6) respectively light transmission section (6), preferably at least one single-hole glazing or at least one light band (2) surrounded by the plankings (4), having at least one fire protection glass pane (7), whereby
the fire protection glass pane (7) of the light transmission area (6) is mounted on one side of the stud partition profile elements (3) in such a manner/way, that this fire protection glass pane (7) is substantially flush even with/to the plankings (4) mounted on this/the same side of the stud partition profile elements (3), and
the fire protection glass pane (7) is a compound structure of at least two glass panes (8, 9) arranged in parallel to each other, between which in each case at least one fire protection layer (10) is arranged,
whereby one of the at least two glass panes (9) of the fire protection glass pane (7):
projects/protrudes over the at least one other glass pane (8) of the fire protection glass pane (7) on at least one side edge of the fire protection glass pane (7), preferably creating a step slot on at least one side edge of the fire protection glass pane (7), and
comprises in the project/protrude area respectively section (13) of the glass pane (9) at least two openings/holes (14) which are spaced apart from each other, preferably are arranged on opposing edges of the glass pane (9), for fastening the fire protection glass pane (7) on/to the stud partition profile elements (3), especially by at least one fixing means, especially comprising a screw passing through the glass pane (9).

2. A partition wall (1) according to claim 1, **characterized in that** the vertical and/or horizontal joints/joint surfaces of the fire protection glass pane (7) and the vertical and/or horizontal joints/joint surfaces of the plankings (4) surrounding the fire protection glass pane (7) are mounted flush even and/or positive locking to/with each other.

3. A partition wall (1) according to claim 1 or claim 2, **characterized in that** one of the at least two glass panes (9) of the fire protection glass pane (7) projects/protrudes over the at least one other glass pane (8) of the fire protection glass pane (7) on at least two opposing side edges of the fire protection glass pane (7), preferably creating a step slot on each of the at least two opposing side edges of the fire protection glass pane (7).

4. A partition wall (1) according to claim 3, **characterized in that** the glass pane (9) comprises in each of the project/protrude area respectively section (13) of the glass pane (9) at least two openings/holes (14) which are spaced apart from each other, preferably are arranged on opposing edges of the glass pane (9), for fastening the fire protection glass pane (7) on/to the stud partition profile elements (3), especially by at least one fixing means, especially comprising a screw passing through the glass pane (9).

5. A partition wall (1) according to any one of the claims 1 to 4, **characterized in that** the at least one fixing means, especially comprising a screw passing through the glass pane (9), is flush even and/or positive locking to/with the glass pane (9).

6. A partition wall (1) according to any one of the claims 1 to 5, **characterized in that** the fire protection glass pane (7) is build according to the so called water-glass-technology or according to the so called gel-technology.

7. A partition wall (1) according to any one of the claims 1 to 6, **characterized in that** the at least two glass panes (9) of the fire protection glass pane (7) are spaced apart from each other by means of a spacer (11) providing an edge-compound, which spacer (11) preferably is arranged between the at least two glass panes (9) of the fire protection glass pane (7) and particularly preferred extends along the side edges of the fire protection glass pane (7).

8. A partition wall (1) according to any one of claims 1 to 7, **characterized in that** the fire protection glass pane (7) has a height in a range of ≥ 300 mm and ≤ 5000 mm, preferably ≥ 400 mm and ≤ 3500 mm, more preferably ≥ 500 mm and ≤ 3000 mm, a width in a range of ≥ 300 mm and ≤ 1800 mm, preferably ≥ 400 mm and ≤ 1700 mm, more preferably ≥ 500 mm and ≤ 1500 mm, and a thickness in a range of ≥ 22 mm and ≤ 60 mm.

9. A partition wall (1) according to any one of claims 1 to 8, **characterized in that** the fire protection glass pane (7) has a weight in a range of ≥ 40 kg/m² and ≤ 140 kg/m².

10. A partition wall (1) according to any one of claims 1 to 9, **characterized in that** the stud partition profile elements (3) have a cross section which is substantially rectangular, substantially rectangular hollow, substantially C-shaped, substantially U-shaped and/or substantially L-shaped.

11. A partition wall (1) according to any one of claims 1 to 10, **characterized in that** stud partition profile elements (3) are made of wood, steel, aluminium and/or concrete.

12. A partition wall (1) according to any one of claims 1 to 11, **characterized in that** the plankings (4), preferably building material boards (4) respectively building material plates (4), are made of gypsum or calcium silicate, preferred are gypsum plaster boards or calcium silicate plaster boards, preferably according to building material class respectively construction material class A1 or A2.

13. A method for establishing a partition wall (1) according to any of the claims 1 to 12, especially for creation of a fire compartment in rooms of buildings, comprises the steps of
a) installation of a metal stud construction adjacent to the area which will be covered later by at least one fire protection glass pane (7) which is a compound structure of at least two glass panes (8, 9) arranged in parallel to each other, between which in each case at least one fire protection layer (10) is arranged, whereby one of the at least two glass panes (9) of the fire protection glass pane (7) projects/protrudes over the at least one other glass pane (8) of the fire protection glass pane (7) on at least one side edge of the fire protection glass pane (7), and whereby the glass pane (9) comprises in the project/protrude area respectively section of the glass pane (9) at least two openings/holes (14) which are spaced apart from each other, preferably are arranged on opposing edges of the glass pane (9),
b) arrangement and alignment of profiles supporting the at least one fire protection glass pane (7), preferably with additional fastening of these profiles at the top and bottom in the supporting structure of the metal stud construction,
c) cladding of the metal stud construction with opaque plankings (4), preferably a first layer on the opposite side of the at least one fire protection glass pane (7), and arrangement of soffit strips,
d) installation and lateral fastening of the at least one fire protection glass pane (7) into the profiles,
e) final cladding of the metal stud construction with opaque plankings (4), preferably a second layer on the side of the at least one fire protection glass pane (7), and joint filling of the outer layer, and
f) filling of the joints around the at least one fire protection glass pane (7) with a sealant (12).

## Patentansprüche

1. Trennwand (1), insbesondere zur Schaffung eines Brandabschnitts in Gebäuderäumen, mit
mindestens zwei vertikal und/oder horizontal angeordneten Ständertrennprofilelemente (3), die voneinander beabstandet sind und sich vertikal zwischen dem Boden und der Decke eines Raumes bzw. horizontal zum Boden bzw. zur Decke eines Raumes erstrecken,
auf gegenüberliegenden Seiten der Ständertrennprofilelemente (3) befestigten lichtundurchlässigen Beplankungen (4), vorzugsweise Baumaterialtafeln (4) bzw. Baumaterialplatten (4) und
mindestens einem Lichttransmissionsbereich (6) bzw. Lichttransmissionsabschnitt (6), vorzugsweise mindestens einer Einlochverglasung oder mindestens einem von den Beplankungen (4) umgebenen Lichtband (2), mit mindestens einer Brandschutzglasscheibe (7), wobei
die Brandschutzglasscheibe (7) des Lichttransmissionsbereichs (6) auf einer Seite der Ständertrennprofilelemente (3) derart befestigt ist, dass diese Brandschutzglasscheibe (7) im Wesentlichen bündig mit/zu den auf dieser/derselben Seite der Ständertrennprofilelemente (3) befestigten Beplankungen (4) ist, und
die Brandschutzglasscheibe (7) eine Verbundstruktur aus mindestens zwei parallel zueinander angeordneten Glasscheiben (8, 9) ist, zwischen denen jeweils mindestens eine Brandschutzschicht (10) angeordnet ist,
wobei eine der mindestens zwei Glasscheiben (9) der Brandschutzglasscheibe (7):
über die mindestens eine andere Glasscheibe (8) der Brandschutzglasscheibe (7) an mindestens einem seitlichen Rand der Brandschutzglasscheibe (7) vorspringt/übersteht, wobei vorzugsweise ein Stufenschlitz an mindestens einem seitlichen Rand der Brandschutzglasscheibe (7) entsteht, und
im Vorsprungsbereich bzw. -abschnitt (13) der Glasscheibe (9) mindestens zwei voneinander beabstandete, vorzugsweise an gegenüberliegenden Rändern der Glasscheibe (9) angeordnete Öffnungen/Löcher (14) zur Befestigung der Brandschutzglasscheibe (7) auf/an den Ständertrennprofilelementen (3) umfasst, insbesondere durch mindestens ein Befestigungsmittel, das insbesondere eine die Glasscheibe (9) durchdringende Schraube umfasst.

2. Trennwand (1) nach Anspruch 1, **dadurch gekennzeichnet, dass** die vertikalen und/oder horizontalen Fugen/Fugenoberflächen der Brandschutzglasscheibe (7) und die vertikalen und/oder horizontalen Fugen/Fugenoberflächen der die Brandschutzglasscheibe (7) umgebenden Beplankungen (4) flächenbündig und/oder formschlüssig an/miteinander befestigt sind.

3. Trennwand (1) nach Anspruch 1 oder Anspruch 2, **dadurch gekennzeichnet, dass** eine der mindestens zwei Glasscheiben (9) der Brandschutzglasscheibe (7) über die mindestens eine andere Glasscheibe (8) der Brandschutzglasscheibe (7) an mindestens zwei gegenüberliegenden Seitenrändern der Brandschutzglasscheibe (7) vorspringt/übersteht, wobei vorzugsweise an jedem der mindestens zwei gegenüberliegenden Seitenränder der Brandschutzglasscheibe (7) ein Stufenschlitz entsteht.

4. Trennwand (1) nach Anspruch 3, **dadurch gekennzeichnet, dass** die Glasscheibe (9) in jedem der Vorsprungsbereiche bzw. -abschnitte (13) der Glasscheibe (9) mindestens zwei voneinander beabstandete, vorzugsweise an gegenüberliegenden Rändern der Glasscheibe (9) angeordnete Öffnungen/Löcher (14) zur Befestigung der Brandschutzglasscheibe (7) auf/an den Ständertrennprofilelementen (3) umfasst, insbesondere durch mindestens ein Befestigungsmittel, das insbesondere eine die Glasscheibe (9) durchdringende Schraube umfasst.

5. Trennwand (1) nach einem der Ansprüche 1 bis 4, **dadurch gekennzeichnet, dass** das mindestens eine Befestigungsmittel, insbesondere eine die Glasscheibe (9) durchdringende Schraube, bündig und/oder formschlüssig mit der Glasscheibe (9) ist.

6. Trennwand (1) nach einem der Ansprüche 1 bis 5, **dadurch gekennzeichnet, dass** die Brandschutzglasscheibe (7) nach der so genannten Wasserglastechnologie oder nach der so genannten Geltechnologie hergestellt ist.

7. Trennwand (1) nach einem der Ansprüche 1 bis 6, **dadurch gekennzeichnet, dass** die mindestens zwei Glasscheiben (9) der Brandschutzglasscheibe (7) durch einen einen Randverbund bereitstellenden Abstandshalter (11) voneinander beabstandet sind, wobei der Abstandshalter (11) vorzugsweise zwischen den mindestens zwei Glasscheiben (9) der Brandschutzglasscheibe (7) angeordnet ist und besonders bevorzugt entlang der seitlichen Ränder der Brandschutzglasscheibe (7) verläuft.

8. Trennwand (1) nach einem der Ansprüche 1 bis 7, **dadurch gekennzeichnet, dass** die Brandschutzglasscheibe (7) eine Höhe in einem Bereich von ≥ 300 mm und ≤ 5000 mm, vorzugsweise ≥ 400 mm und ≤ 3500 mm, noch bevorzugter ≥ 500 mm und ≤ 3000 mm, eine Breite in einem Bereich von ≥ 300 mm und ≤ 1800 mm, vorzugsweise ≥ 400 mm und ≤ 1700 mm, noch bevorzugter ≥ 500 mm und ≤ 1500 mm, und eine Dicke in einem Bereich von ≥ 22 mm und ≤ 60 mm aufweist.

9. Trennwand (1) nach einem der Ansprüche 1 bis 8, **dadurch gekennzeichnet, dass** die Brandschutzglasscheibe (7) ein Gewicht in einem Bereich von ≥ 40 kg/m² und ≤ 140 kg/m² aufweist.

10. Trennwand (1) nach einem der Ansprüche 1 bis 9, **dadurch gekennzeichnet, dass** die Ständertrennprofilelemente (3) einen Querschnitt aufweisen, der im Wesentlichen rechteckig, im Wesentlichen rechteckig hohl, im Wesentlichen C-förmig, im Wesentlichen U-förmig und/oder im Wesentlichen L-förmig ist.

11. Trennwand (1) nach einem der Ansprüche 1 bis 10, **dadurch gekennzeichnet, dass** Ständertrennprofilelemente (3) aus Holz, Stahl, Aluminium und/oder Beton hergestellt sind.

12. Trennwand (1) nach einem der Ansprüche 1 bis 11, **dadurch gekennzeichnet, dass** die Beplankungen (4), vorzugsweise Baumaterialtafeln (4) bzw. Baumaterialplatten (4), aus Gips oder Kalziumsilikat, bevorzugt aus Gipsputztafeln oder Kalziumsilikatputztafeln, vorzugsweise nach Baustoffklasse bzw. Baustoffklasse A1 oder A2, hergestellt sind.

13. Verfahren zur Errichtung einer Trennwand (1) nach einem der Ansprüche 1 bis 12, insbesondere zur Schaffung eines Brandabschnitts in Gebäuderäumen, das folgende Schritte umfasst
a) Einbau einer Metallständerkonstruktion angrenzend an den Bereich, der später mit mindestens einer Brandschutzglasscheibe (7) abgedeckt werden soll, die ein Verbundaufbau aus mindestens zwei parallel zueinander angeordneten Glasscheiben (8, 9) ist, zwischen denen jeweils mindestens eine Brandschutzschicht (10) angeordnet ist, wobei eine der mindestens zwei Glasscheiben (9) der Brandschutzglasscheibe (7) über die mindestens eine andere Glasscheibe (8) der Brandschutzglasscheibe (7) an mindestens einem seitlichen Rand der Brandschutzglasscheibe (7) vorspringt/vorsteht, und wobei die Glasscheibe (9) im Bereich des Vorsprungsbereichs bzw. -abschnitts der Glasscheibe (9) mindestens zwei voneinander beabstandete Öffnungen/Löcher (14) umfasst, die vorzugsweise an gegenüberliegenden Rändern der Glasscheibe (9) angeordnet sind,
b) Anordnung und Ausrichtung von Profilen, die die mindestens eine Brandschutzglasscheibe (7) stützen, vorzugsweise mit zusätzlicher Befestigung dieser Profile oben und unten in der Stützstruktur der Metallständerkonstruktion,
c) Verkleidung der Metallständerkonstruktion mit lichtundurchlässigen Beplankungen (4), vorzugsweise eine erste Schicht auf der gegenüberliegenden Seite der mindestens einen Brandschutzglasscheibe (7), und Anordnung von Untersichtsleisten,
d) Einbau und seitliche Befestigung der mindestens einen Brandschutzglasscheibe (7) in den Profilen,
e) abschließende Verkleidung der Metallständerkonstruktion mit lichtundurchlässigen Beplankungen (4), vorzugsweise einer zweiten Schicht auf der Seite der mindestens einen Brandschutzglasscheibe (7), und Fugenfüllung der äußeren Schicht, und
f) Füllen der Fugen um die mindestens eine Brandschutzglasscheibe (7) mit einem Dichtstoff (12).

## Revendications

1. Cloison de séparation (1), notamment pour la création d'un compartiment coupe-feu dans des salles de bâtiments, ayant
au moins deux éléments profilés de cloison en treillis (3) disposés verticalement et/ou horizontalement, qui sont espacés l'un de l'autre et s'étendent verticalement entre le sol et le plafond d'une salle respectivement horizontalement par rapport au sol respectivement un plafond d'une salle,
des planches opaques (4), de préférence des panneaux de matériau de construction (4) respectivement des plaques de matériau de construction (4), montées sur des côtés opposés des éléments profilés de cloison en treillis (3) et
au moins une zone de transmission de lumière (6) respectivement une section de transmission de lumière (6), de préférence au moins un vitrage à trou unique ou au moins une bande de lumière (2) entourée par les planches (4), ayant au moins une vitre de protection contre les incendies (7), moyennant quoi
la vitre de protection contre les incendies (7) de la zone de transmission de lumière (6) est montée sur un côté des éléments profilés de
cloison en treillis (3) de manière/façon à ce que cette vitre (7) de protection contre les incendies soit sensiblement affleurante de manière régulière avec/sur les planches (4) montées sur ce/le même côté des éléments profilés (3) de cloison en treillis, et
la vitre de protection contre les incendies (7) est une structure composée d'au moins deux vitres (8, 9) disposées parallèlement l'une à l'autre, entre lesquelles, dans chaque cas, au moins une couche de protection contre les incendies (10) est disposée,
moyennant quoi l'une des au moins deux vitres (9) de la vitre de protection contre les incendies (7) :
fait saillie/protrusion sur l'au moins une autre vitre (8) de la vitre de protection contre les incendies (7) sur au moins un bord latéral de la vitre de protection contre les incendies (7), de préférence créant une fente en escalier sur au moins un bord latéral de la vitre de protection contre les incendies (7), et
comprend dans la zone de saillie/protrusion respectivement la section (13) de la vitre (9) au moins deux ouvertures/trous (14) qui sont espacés l'un de l'autre, de préférence sont disposés sur des bords opposés de la vitre (9), pour fixer la vitre de protection contre les incendies (7) sur les éléments profilés de cloison en treillis (3), notamment par au moins un moyen de fixation comprenant notamment une vis traversant la vitre (9).

2. Cloison de séparation (1) selon la revendication 1,
**caractérisée en ce que** les joints/surfaces de joint verticaux et/ou horizontaux de la vitre de protection contre les incendies (7) et les joints/surfaces de joint verticaux et/ou horizontaux des planches (4) entourant la vitre de protection contre les incendies (7) sont montés de manière affleurante régulière et/ou en verrouillage positif les uns par rapport aux autres.

3. Cloison de séparation (1) selon la revendication 1 ou la revendication 2, **caractérisée en ce que** l'une des au moins deux vitres (9) de la vitre de protection contre les incendies (7) fait saillie/protrusion sur l'au moins une autre vitre (8) de la vitre de protection contre les incendies (7) sur au moins deux bords latéraux opposés de la vitre de protection contre les incendies (7), créant de préférence une fente en escalier sur chacun des au moins deux bords latéraux opposés de la vitre de protection contre les incendies (7).

4. Cloison de séparation (1) selon la revendication 3,
**caractérisée en ce que** la vitre (9) comprend dans chacune de la zone de saillie/protrusion respectivement la section (13) de la vitre (9) au moins deux ouvertures/trous (14) qui sont espacés l'un de l'autre, de préférence sont disposés sur des bords opposés de la vitre (9), pour fixer la vitre de protection contre les incendies (7) sur les éléments profilés de cloison en treillis (3), notamment par au moins un moyen de fixation, comprenant notamment une vis traversant la vitre (9).

5. Cloison de séparation (1) selon l'une quelconque des revendications 1 à 4, **caractérisée en ce que** l'au moins un moyen de fixation, comprenant notamment une vis traversant la vitre (9), est affleurant de manière régulière et/ou en verrouillage positif à/avec la vitre (9).

6. Cloison de séparation (1) selon l'une quelconque des revendications 1 à 5, **caractérisée en ce que** la vitre de protection contre les incendies (7) est construite selon la technologie dite d'eau-verre ou selon la technologie dite de gel.

7. Cloison de séparation (1) selon l'une quelconque des revendications 1 à 6, **caractérisée en ce que** les au moins deux vitres (9) de la vitre de protection contre les incendies (7) sont espacées l'une de l'autre au moyen d'une entretoise (11) fournissant un composé de bord, laquelle entretoise (11) est de préférence disposée entre les au moins deux vitres (9) de la vitre de protection contre les incendies (7) et de manière particulièrement préférée s'étend le long des bords latéraux de la vitre de protection contre les incendies (7).

8. Cloison de séparation (1) selon l'une quelconque des revendications 1 à 7, **caractérisée en ce que** la vitre de protection contre les incendies (7) a une hauteur dans une plage ≥ 300 mm et ≤ 5 000 mm, de préférence ≥ 400 mm et ≤ 3 500 mm, plus préférablement ≥ 500 mm et ≤ 3 000 mm, une largeur dans une plage ≥ 300 mm et ≤ 1 800 mm, de préférence ≥ 400 mm et ≤ 1 700 mm, plus préférablement ≥ 500 mm et ≤ 1 500 mm, et une épaisseur dans une plage ≥ 22 mm et ≤ 60 mm.

9. Cloison de séparation (1) selon l'une quelconque des revendications 1 à 8, **caractérisée en ce que** la vitre de protection contre les incendies (7) a un poids dans une plage ≥ 40 kg/m² et ≤ 140 kg/m².

10. Cloison de séparation (1) selon l'une quelconque des revendications 1 à 9, **caractérisée en ce que** les éléments de profil de cloison en treillis (3) ont une section transversale qui est sensiblement rectangulaire, sensiblement rectangulaire creuse, sensiblement en forme de C, sensiblement en forme de U et/ou sensiblement en forme de L.

11. Cloison de séparation (1) selon l'une quelconque des revendications 1 à 10, **caractérisée en ce que** des éléments profilés de cloison en treillis (3) sont faits de bois, d'acier, d'aluminium et/ou de béton.

12. Cloison de séparation (1) selon l'une quelconque des revendications 1 à 11, **caractérisée en ce que** les planches (4), de préférence les panneaux de matériau de construction (4) respectivement des plaques de matériau de construction (4), sont faits de gypse ou de silicate de calcium, de préférence sont des panneaux de plâtre de gypse ou des panneaux de plâtre de silicate de calcium, de préférence selon la classe de matériau de construction respectivement la classe de matériau de construction A1 ou A2.

13. Procédé d'établissement d'une cloison de séparation (1) selon l'une quelconque des revendications 1 à 12, notamment pour la création d'un compartiment coupe-feu dans des salles de bâtiments, comprenant les étapes consistant à
a) installer une construction à poteau métallique adjacente à la zone qui sera recouverte par la suite par au moins une vitre de protection contre les incendies (7) qui est une structure composée d'au moins deux vitres (8, 9) disposées parallèlement l'une à l'autre, entre lesquelles, dans chaque cas, au moins une couche de protection contre les incendies (10) est agencée, moyennant quoi l'une des au moins deux vitres (9) de la vitre de protection contre les incendies (7) fait saillie/protrusion sur l'au moins une autre vitre (8) de la vitre de protection contre les incendies (7) sur au moins un bord latéral de la vitre de protection contre les incendies (7), et moyennant quoi la vitre (9) comprend dans la zone de saillie/protrusion respectivement une section de la vitre (9) au moins deux ouvertures/trous (14) qui sont espacés l'un de l'autre, de préférence sont disposés sur des bords opposés de la vitre (9),
b) agencer et aligner des profilés supportant l'au moins une vitre de protection contre les incendies (7), de préférence avec une fixation supplémentaire de ces profilés en haut et en bas dans la structure de support de la construction à poteau métallique,
c) revêtir la construction à poteau métallique avec des planches opaques (4), de préférence une première couche sur le côté opposé de l'au moins une vitre de protection contre les incendies (7), et un agencement de bandes de soffitte,
d) installer et fixer latéralement l'au moins une vitre de protection contre les incendies (7) dans les profilés,
e) revêtir d'un revêtement final la construction de poteau métallique avec des planches opaques (4), de préférence une seconde couche sur le côté de l'au moins une vitre de protection contre les incendies (7), et remplir des joints de la couche externe, et
f) remplir les joints autour de l'au moins une vitre de protection contre les incendies (7) avec un produit d'étanchéité (12).
